Europäisches Patentamt

European Patent Office

Office européen des brevets

(11) Publication number: **0 130 323**
**B1**

(12) **EUROPEAN PATENT SPECIFICATION**

(45) Date of publication of patent specification: **16.05.90**

(21) Application number: **84105413.3**

(22) Date of filing: **12.05.84**

(51) Int. Cl.⁵: **C 08 F 246/00, C 08 F 212/14, C 08 F 2/06**

(54) **Free-radical addition copolymers of meta- or para-isopropenyl-alpha,alpha-dimethylbenzylisocyanate.**

(30) Priority: **01.06.83 US 499961**

(43) Date of publication of application:
**09.01.85 Bulletin 85/02**

(45) Publication of the grant of the patent:
**16.05.90 Bulletin 90/20**

(84) Designated Contracting States:
**AT BE CH DE FR GB IT LI NL SE**

(56) References cited:
**DE-A-1 745 279**
**FR-A-1 379 279**
**GB-A-1 152 899**
**US-A-3 290 350**

(73) Proprietor: **AMERICAN CYANAMID COMPANY**
**1937 West Main Street P.O. Box 60**
**Stamford Connecticut 06904-0060 (US)**

(72) Inventor: **Dexter, Robin William**
**20 Irmgard Lane**
**Georgetown, CT 06829 (US)**
Inventor: **Forgione, Peter Salvatore**
**120 Little Hill Drive**
**Stamford, CT 06905 (US)**
Inventor: **Singh, Balwant**
**93 Janes Lane**
**Stamford, CT 06905 (US)**

(74) Representative: **Wächtershäuser, Günter, Dr.**
**Tal 29**
**D-8000 München 2 (DE)**

Courier Press, Leamington Spa, England.

**Description**

This invention relates to copolymers of meta- or para-isopropenyl-α,α-dimethylbenzylisocyanate and to a method of making same.

In U.S. Patent 4,439,616 issued March 27, 1984, there is disclosed a method for production of tertiary aralkyl isocyanates, such as tetramethyl xylylene diisocyanate (TMXDI), by thermal cracking of corresponding urethanes formed by addition of corresponding olefins and carbamic acid esters at moderate temperatures and in the presence of acid catalyst. Such process is particularly useful in producing the meta- or para- isomers of TMXDI and as the by-product thereof, substantial amounts of the corresponding vinyl isocyanate meta- or para-isomers (i.e. meta-isopropenyl-α,α-dimethylbenzyliso-cyanate (m-TMI) or para-isopropenyl-α,α-dimethylbenzylisocyanate (p-TMI), respectively), are formed.

The m-TMI or p-TMI by-product in such systems may be recycled within the process to improve the overall yield of TMXDI therein, but has substantial utility per se as a separate product due to its difunctional character, viz., the presence of reactive isocyanato (-NCO) and vinyl groups. Thus, TMI may be homo- or co-polymerized to form polymers with isocyanate functionality which are cross-linkable with curatives containing a difunctional or polyfunctional amino or hydroxyl compound. Such cross-linkable compositions have film-forming properties and advantageously may be used for coatings as for example on metal, wood and glass substrates, as well as having potential applicability for production of molded articles, such as by reaction injection molding (RIM).

In general, it is desirable that the TMI homo-polymers and copolymers be light stable in character and cross-linkable with diols, triols, polyols and oligomeric hydroxyl-containing compounds. Such homo- or copolymers of TMI further should be soluble in common coatings solvents for coatings end-use applications (i.e., solvents such as benzene, toluene, xylene, hexane, methylene chloride, cellosolve acetate, etc.) and should be free of toxicity problems associated with conventional isocyanates used heretofore.

U.S. Patent No. 3,290,350 and DE—A—1745279 disclose the copolymerization of TMI by conventional methods using known addition polymerization initiators, such as those of the free radical type such as peroxy an azo initiators. More specifically, these patents disclose copolymerization of m-TMI in a solution of benzene containing 1,1-azodicyclohexane carbonitrile with ethylene, introduced into the reaction system as a gas at elevated pressure, the polymerization being carried out at a temperature of 115 to 125°C. The resulting copolymer is precipitated from benzene solution at ambient temperature, as a result of its insolubility in benzene at ambient temperature. Such TMI/ethylene copolymer is not light stable in character.

The insolubility of the TMI-copolymer produced by the above procedure in benzene and similar aromatic solvents, e.g., toluene and benzene is a severe disadvantage, in view of desirable end-use applications such as coatings and reaction injection molding wherein it is desired to dissolve or disperse the homopolymer in such aromatic solvents. Further, the presence of any significant crosslinking in the resultant copolymer is destructive of the linear structure thereof and may result in premature gelation of the copolymer when employed in end-use applications such as coatings.

It is an object of this invention to provide a method of making TMI copolymers which does not require isolation or purification of the copolymerization reaction product, which uses anhydrous copolymerization media, and which yields a substantially monomer-free copolymer product (thereby avoiding the toxicity concerns otherwise associated with the unreacted isocyanate monomer).

It is another object of the present invention to provide aromatic solvent-soluble substantially linear copolymers of M-TMI or p-TMI which are substantially free of unsaturation and cross-linking.

It is a further object of the invention to provide copolymers of the above type which have high molecular weights, e.g., on the order of 2,000 to 200,000.

The present invention relates to a substantially linear, aromatic solvent-soluble copolymer, substantially free of unsaturation and cross-linking, having a molecular weight of 2,000 to 200,000, containing from 5 to 40 mole percent repeating units derived from meta- or para-isopropenyl-α,α-dimethylisocyanate, from 20 to 50 mole% repeating units derived from methylmethacrylate, from 35 to 55 mole% repeating units derived from butylacrylate and from 0 to 25 mole% repeating units derived from styrene.

In another aspect, the invention relates to a method of forming a copolymer of the above-described type, comprising solution polymerizing the meta- or para-isopropenyl-α,α-dimethylbenzylisocyanate and the other ethylenically unsaturated comonomer in an aromatic hydrocarbon solvent and in the presence of a free radical initiator, or alternatively, under irradiation by ultraviolet radiation or electron beam irradiation.

The free-radical initiator in the method above-described suitably may comprise t-butylperbenzoate, benzyl peroxide, or mixtures thereof.

In a particularly preferred method aspect of the invention, free-radical addition polymerization is carried out by the following steps:

(a) forming a reaction volume comprising the aromatic hydrocarbon solvent, free-radical initiator, portions of all of the comonomers except such one thereof as has the highest reactivity thereof, such one of the monomers being fully present in the reaction volume in an amount to be incorporated into the copolymer; and

(b) adding remaining portions of each apportioned comonomer to the reaction volume under polymerization reaction conditions while maintaining a substantially constant monomer composition in the reaction volume, to form the copolymer with a substantially homogeneous polymeric composition.

The foregoing method also results in essentially 100% conversion of monomers, to yield a reaction product which is substantially free of monomeric reactants.

The copolymers of the present invention usefully may be employed as cross-linkable compositions having utility for forming molded objects, such as by reaction injection molding, or in coatings. Such cross-linkable compositions may employ resin component containing a copolymer according to the invention and a cross-linkingly effective amount of a curing component containing a curative with free hydroxyl or amine functionalities, such as trimethylol propane, ethylene diamine ketimine, diethylene glycol, and 1,2,6-hexane-triol. Such compositions when used for coatings applications may be applied directly to the substrate, e.g., wood, metal or plastic, and the applied film cured at ambient conditions with exposure to atmospheric humidity.

As used herein, "aromatic solvent-soluble" means that the copolymer is soluble at ambient temperature, inter-alia, in toluene, xylene and benzene.

As also used herein, "substantially free of unsaturation and cross-linking" means that the copolymer contains less than one percent by weight of ethylenically unsaturated groups.

As indicated hereinabove, the presence of significant levels of unsaturation content and cross-linking in TMI copolymers which renders such polymers non-linear structurally and aromatic solvent insoluble.

Such deficiencies are overcome in the copolymers of meta-TMI or para-TMI according to the present invention, in accordance with which copolymers are produced which are substantially linear, aromatic solvent-soluble, substantially monomer-free, and substantially free of unsaturation and cross-linking. These unexpected characteristics of the copolymers of the present invention are achieved by forming the copolymer by solution polymerization in an aromatic hydrocarbon solvent of the meta- or para-TMI and other ethylenically unsaturated comonomers selected from the group consisting of methyl methacrylate, butyl acrylate and styrene in the presence of a free-radical initiator such as t-butylperbenzoate, benzoyl peroxide, and mixtures thereof. Alternatively, in place of the free-radical initiators mentioned, the free radical addition polymerization reaction may be carried out under irradiation by ultraviolet (UV) radiation or electron beam irradiation. Copolymerization under these conditions tends to promote highly efficient polymerization, yielding product characterized by substantial absence of any cross-linking or residual unsaturation, with high molecular weights, e.g., on the order of from 2,000 to 200,000, with high isocyanate (—NCO) content, i.e, isocyanate mole percent contents of ten percent and higher are readily achievable in the practice of the present invention.

Particularly useful copolymer compositions include coplymers containing from 10 to 30 mole percent repeating units derived from meta- or para-TMI, from 20 to 50 mole percent repeating units derived from methyl methacrylate, from 35 to 45 mole percent repeating units derived from butyl acrylate, and from 0 to 25 mole percent repeating units derived from styrene.

Aromatic hydrocarbon solvents may be used in the copolymerization reaction to from the copolymers of the present invention such as toluene, xylene, benzene and chlorobenzene. Other solvents usefully may be employed, such as methylene chloride, etylene, dichloride and the like. Such solution polymerization may be carried out batchwise or in continuous fashion, depending on the production requirements of the given application.

In a preferred method (hereinafter denoted "continuous addition method") for carrying out the copolymerization, reaction volume is formed comprising the aromatic hydrocarbon solvent, free-radical initiator, portions of all of the comonomers to be employed in the reaction except such one thereof as has the highest reactivity of the comonomers, such one being fully present in the reaction volume in an amount to be incorporated into the copolymer product. The remaining portions of each of the apportioned comonomers is then added to the reaction volume under polymerization reaction conditions while maintaining a substantially constant monomer composition in the reaction volume, to form copolymer product having a substantially homogeneous polymeric composition.

In practice, the copolymerization reaction may be conducted with a temperature of from 50°C to 120°C for a reaction time of from 5 to 10 hours.

Another preferred copolymer according to the present invention is a terpolymer containing from 10 to 30 mole percent repeating units derived from meta- or para-TMI, from 30 to 50 mole percent repeating units derived from methyl methacrylate, and from 35 to 55 mole percent repeating units derived from butyl acrylate, wherein the copolymerization is carried out by the aforementioned method wherein only the full amount of the comonomer having the lowest reactivity is fully present in the reaction volume, with the other comonomers being added while maintaining substantially constant monomer composition in the reaction volume. For such mode of polymerization, the monomer fully present in the reaction volume is butyl acrylate, and the reaction volume contains from 25 to 50 percent of the total amount of methyl methacrylate and butyl acrylate monomers to be incorporated into the copolymer product.

The copolymers of the present invention also have utility as film-forming components of coatings, and suitably may be employed in curable film-forming compositions comprising a resin component containing a copolymer according to the invention and a cross-linkingly effective amount of a curing component, such as curatives selected from the group consisting of trimethylol propane, ethylene diamine ketimine, diethylene glycol, 1,2,6-hexanetriol, and oligomeric (low molecular weight) polyols. Such film-forming composition may be employed to form a coating on a substrate by application thereto, of a film of the composition, which then may be cured by exposure to moisture (atmospheric humidity) to assist the cross-linking cure of the coating. Particularly useful for such coatings applications are copolymers containing from 5 to 40 mole percent repeating units derived from meta- or para-TMI, from 20 to 50 mole percent repeating units derived from methyl methacrylate and from 35 to 45 mole percent repeating units derived from butyl acrylate. The curing of such film-forming compositions is advantageously carried out under conditions where the molar ratio of copolymeric isomeric cyanate groups to curing component hydroxyl or amine groups is approximately 1:1.

In the broad practice of the present invention, both meta- and para-TMI can be co-polymerized with various acrylates, e.g., methyl methacrylate or butyl methacrylate as well as styrene at various concentrations to give product copolymers of varying compositions and properties. Where styrene is employed as comonomer the amount thereof should be limited, to not more than 30 mole percent in the product copolymer, to insure that such product copolymer is light stable in character, where light stability is necessary and/or desired. The free radical-initiated addition polymerization may be carried out in bulk or in solution, depending on the monomer reactivities and the anticipated end-use. In some free-radical copolymerizations wherein comonomers of significantly different reactivity are employed, conversions close to 100 percent may be achieved by using the continuous addition method hereinabove described, wherein the monomer having the lowest reactivity is fully contained in the reaction volume together with portions of all other monomers, with the unadded portions being added under polymerization reaction conditions while maintaining substantially constant monomer composition in the reaction volume. Product copolymer molecular weights may be controlled by the use of chain transfer agents such as thiols or mercaptans or by the use of high levels of the free-radical initiator.

The application of the invention is more fully illustrated by the following examples, wherein all parts and percentages are by weight, unless otherwise indicated.

## Example 1

In this Example, a copolymer of m-TMI, methyl methacrylate (MMA), butyl acrylate (BA) and styrene (ST) was prepared by free-radical polymerization in accordance with the method of the present invention.

These polymers were prepared at 50% weight solids content in toluene using 1.3 weight percent t-butyl perbenzoate, based on the weight of monomers present, at a reaction temperature of 114—115°C, having the compositions shown in Table I below.

### Table I

#### Polymer Composition (mole %)

| Reference | m-TMI | MMA | BA | Styrene |
|-----------|-------|-------|-------|---------|
| 1 | 15 | 45 | 40 | 0 |
| 2 | 15.36 | 37.92 | 38.39 | 8.36 |
| 3 | 15.47 | 23.43 | 38.54 | 22.55 |

Table II below shows for the polymers identified in Table I the polymerization reaction time, percent conversion, glass transition temperature Tg and molecular weight (for polymer 1 only) as determined by gel permeation chromatography (GPC).

### Table II

| Reference | Polymerization Time (mins) | Conversion (mole %) | Tg (°C) | Mol. Wt. by GPC |
|-----------|---------------------------|---------------------|---------|-----------------|
| 1 | 430 | 98.4 | 25 | 17,400 |
| 2 | 392 | 97.9 | 29 | - |
| 3 | 406 | 97.2 | 29.5 | - |

As shown by the Table II data, reactions for these tetra copolymers were substantially complete in 6.5—7 hours. Each of the copolymer products was a clear, viscous permeable liquid having a glass transition temperature at approximately ambient temperature levels.

## Example II

A m-TMI/MMA/BA terpolymer was prepared by the 'continuous addition" method described earlier herein, to provide continuous addition of m-TMI and MMA monomers to the reaction volume and yield a substantially homogeneous product terpolymer. To a flask was added 48.15 grams MMA, 85.26 grams BA and 21.84 grams m-TMI. A syringe was prepared containing 26.88 grams MMA and 27.86 grams m-TMI.

The monomers in the flask were mixed with 210 gms toleune and 2.80 gms t-butyl perbenzoate and the resulting reaction volume was deaerated with nitrogen and heated rapidly in an oil bath to 110—114°C.

Monomer (m-TMI and MMA) from the syringe was added slowly, at a rate which maintained a constant monomer composition in the flask, as measured by gas chromatography of sample: (0.30 mls in 5 mls acetone).

Monomer was added at the rate of about 0.6 mls/minute during the first 164 minutes of the reaction, and at the rate of 0.06 mls/minute during the final 260 minutes of the reaction. An extra 1 ml. of the initiator (t-butyl perbenzoate) was added after 272 minutes of reaction. After 424 minutes, the reaction was substantially complete at a conversion of 98.5 mole percent.

### Example III

Solution polymerization of m-TMI/MMA/BA (15/45/40 mole percent, respectively was carried out in toluene at a temperature of 110—114°C, by batch reaction at decreasing levels of initiator with increasing concentrations of monomers in the polymerization solution. The initiator employed was t-butyl perbenzoate in all cases. Data for the various reactions are set out in Table III below:

Table III

| Reference | Concentration Of Monomers In Solution (% by weight) | Reaction Temperature (°C) | Initiator Start (1) | Concentration Levels Total (2) | Time to 95% Conversion (Minutes) | Molecular Weight GPC (3) (Daltons) | Tg (°C) | Viscosity (4) |
|---|---|---|---|---|---|---|---|---|
| | | | (% by weight based on monomer) | | | | | |
| 4 | 20 | 111.5 | 3.33 | 8.33 | 425 | 6,400 | 20 | Thin |
| 5 | 30 | 112 | 2.22 | 4.44 | 420 | 11,000 | 13? | Slightly Viscous |
| 6 | 40 | 113 | 1.67 | 2.50 | 380 | 15,100 | 22.5 | Viscous |
| 7 | 50 | 114-115 | 1.43 | 1.43 | 340 | 17,400 | 21.5 | Viscous-Pourable |

(1), (2)  In some cases incremental addition of initiator during reaction was carried out, so that the initiator level total is then greater than at the start.

(3)  Polystyrene standards

(4)  Visual appearance:  all were water-white (transparent) solutions.  Polymer was soluble in acetone, toluene, methylene chloride; insoluble in n-alkanes.

EP 0 130 323 B1

As seen by the data, an increasing concentration of monomer solids allows less initiator to be used, yields increased polymerization rates and results in higher copolymer product molecular weights.

An isocyanate assay for each of the copolymers identified in Table III is contained in Table IV below, showing that the copolymers of the present invention are characterized by high content of free isocyanate (—NCO) groups.

Table IV

| Reference | -NCO Content by Titration with Dibutylamine (meq/g) | Calculated -NCO Content (meq/g) | Infra-red Analysis -NCO/ NCO+-C=O | | |
|---|---|---|---|---|---|
| 4 | 0.87, 0.87 | - | No | NH | 0.35 |
| 5 | 0.74, 0.74 | - | No | NH | 0.45 |
| 6 | 0.54, 0.54 | 0.56 | No | NH | 0.34, 0.36 |
| 7 | 0.65, 0.64 | 0.64 | No | NH | 0.41, 0.45 0.40 |

Example IV

The continuous monomer addition method was emloyed to prepare a terpolymer of homogeneous composition containing 15/45/40 mole percent m-TMI/MMA/BA. The copolymerization reaction was carried out at 110—114°C and 50% monomer solids (final concentrations), with t-butyl perbenzoate as the initiator. Reaction data and product molecular weight and viscosity information are set out in Table V below.

7

Table V

| Reference | Temp. (°C) | Initiator Levels Start Finish (% by weight based on monomer) | | Time to Reach 95% Conv. (min.) | Molecular Weight By GPC (Daltons) | Viscosity* |
|---|---|---|---|---|---|---|
| 8 | 114 | 1.42 | 2.13 | 420 | 15,800 | Viscous, pourable |
| 9 | 110 | 1.40 | 1.90 | 390 | 15,800 | Viscous, pourable |

* Determined also by Brookfield viscosity as 570 cps (30 rpm Spindle 2, LVT, at 50% weight solids in toluene)

The glass transistion temperature (Tg) of Sample 9 was 25°C (Tg of Sample 8 was not measured). Isocyanate assay information for these samples is contained in Table VI below.

Table VI

| Reference | -NCO content by titration with dibutylamine (meq 1 gm) | Calculated -NCO content (meq 1 gm) | Infra-red Analysis -NCO/-NCO + C=O (meq/gm) | |
|---|---|---|---|---|
| 8 | 0.66, 0.63 | 0.64 | -NH | - |
| 9 | 0.57, 0.58 | 0.59 | -NH | 0.40 |

## Example V

Curing Studies were conducted on a 15/40/45 mole percent m-TMI/BA/MMA terpolymer, using the following as curatives (crosslinkers):

| Curative | Compound |
|---|---|
| W | Ethylenediamine Ketimine |
| X | Diethylene Glycol |
| Y | Trimethylolpropane |
| Z | 1,2,6-hexanetriol |

For overall cure response at both elevated and at ambient temperature, the TMI terpolymer/curative Y system was the best. Solvent resistant films were obtained on cure schedules as low as 20'/80°C and within 4—7 days at ambient temperature.

The curative X system showed good advancement of cured panels at ambient temperature and ambient cured films developed good solvent resistance within 7 days (200+ MEK rubs).

The curative Z system exhibited sluggish initial cure response and did not show good subsequent ambient room temperature advancement.

Like curative Z, the curative W system also showed a sluggish cure reponse, and ambient cure reponse was also sluggish. Even after 7 days it developed only marginal solvent resistance (120 MEK rubs).

The foregoing characterizations were based on films of the terpolymer/curative compositions at 1:1 molar ratio of terpolymer-NCO groups to the curative functionality ($-NH_2$ or $-OH$), and 45% net volatiles in toluene in the coating compositions, as applied to substrate panels of 12005 aluminium. The terpolymer contained 2.42% NCO based on an equivalent weight of 1735.5 (0.575 meq/gm of solution; 51.8% NV in toluene). The equivalent weights of curatives W, Y and X were 30, 44 and 53 respectively.

Data are shown in Tables VIII—X below.

## Table VII

### TMI Copolymers - Dry Film Characteristics

| CURATIVE (CROSSLINKING AGENT) | | W | X | Y | Z |
|---|---|---|---|---|---|
| 20'/125°C | THICK. | | | 1.2 | 1.2 |
| | KNOOP | | | 12.7 | 12.0 |
| | MEK, MAR | | | - | 150 |
| | REMOVE | | | 200+ | 200 |
| 20'/100°C | THICK. | 1.2 | 1.2 | 1.2 | 1.2 |
| | KNOOP | 10.4 | 13.0 | 12.5 | 10.6 |
| | MEK, MAR | 90 | 90 | -- | 50 |
| | REMOVE | 150 | 190 | 200+ | 90 |
| 20'/80°C | THICK. | 1.2 | 1.2 | 1.2 | 1.2 |
| | KNOOP | 10.5 | 9.8 | 11.4 | 7.5 |
| | MEK, MAR | 40 | 50 | 150 | 10 |
| | REMOVE | 80 | 110 | 200 | 35 |

TABLE VIII

TMI TERPOLYMER

ADVANCEMENT AT ROOM TEMPERATURE

| CROSSLINKING AGENT | | W | X | Y | Z |
|---|---|---|---|---|---|
| AFTER 1 DAY | | | | | |
| 20'/100°C | THICK.<br>MEK, MAR/<br>REMOVE | 1.2<br>90/150 | | | |
| 20'/80°C | THICK.<br>MEK, MAR/<br>REMOVE | 1.2<br>40/110 | | 1.2<br>200+ | |
| AFTER 2 DAYS | | | | | |
| 20'/100°C | THICK.<br>MEK, MAR/<br>REMOVE | | 1.2<br>150/200 | | 1.2<br>90/130 |
| 20'/80°C | THICK.<br>MEK, MAR/<br>REMOVE | | 1.2<br>80/140 | | 1.2<br>20/70 |
| R.T.* | THICK.<br>MEK, MAR/<br>REMOVE | | 1.2<br>80/140 | | 1.2<br>10/40 |
| AFTER 4 DAYS | | | | | |
| 20'/100°C | THICK.<br>MEK, MAR/<br>REMOVE | 1.2<br>110/120 | | | |
| 20'/80°C | THICK.<br>MEK, MAR/<br>REMOVE | 1.2<br>50/140 | | | |
| R.T. | THICK.<br>MEK, MAR/<br>REMOVE | 1.2<br>40/110 | | 1.2<br>50/180 | |
| AFTER 7 DAYS | | | | | |
| R.T. | THICK.<br>MEK, MAR/ | 1.2<br>50/120 | 1.2<br>100/180 | 1.2<br>200+ | 1.2<br>20/60 |

\* RT = room temperature

10

EP 0 130 323 B1

TABLE IX

TMI COPOLYMER - CURATIVE Y*
DRY FILM CHARACTERISTICS

| | | | |
|---|---|---|---|
| % NCO | | | 2.42 |
| 20'/100°C | FILM THICK. (MILS) | | 1.2 |
| | KNOOP HARDNESS | | 12.5 |
| | MEK, MAR/REMOVE | | 200+ |
| 20'/30°C | FILM THICK. (MILS) | | 1.2 |
| | KNOOP HARDNESS | | 11.4 |
| | MEK, MAR/REMOVE | | 150/200 |

ADVANCEMENT AT ROOM TEMP.
AFTER 3 DAYS

| | | |
|---|---|---|
| 20'/100°C | FILM THICK. (MILS) | |
| | KNOOP HARDNESS | |
| | MEK, MAR/REMOVE | |
| 20'/80°C | FILM THICK. (MILS) | |
| | KNOOP HARDNESS | |
| | MEK, MAR/REMOVE | |
| R.T. | FILM THICK. (MILS) | |
| | KNOOP HARDNESS | |
| | MEK, MAR/REMOVE | |

AFTER 4 DAYS

| | | |
|---|---|---|
| R.T. | FILM THICK. (MILS) | 1.2 |
| | MEK, MAR/REMOVE | 50/180 |

* 33% NV in cellosolve acetate

Reference Experiment

Small scale copolymerizations of m-TMI with various comonomers were carried out to determine their relative reactivity. Copolymerization reactions were carried out for n-butylacrylate, methyl methacrylate, ethyl acrylate (all at 80 mole%) and styrene at 32, 45 and 56 mole%.

Both n-butyl and ethyl acrylate were found to be incorporated more rapidly than m-TMI, methyl methacrylate was incorporated at a similar rate to m-TMI, but styrene was incorporated much more rapidly than m-TMI. The reactivities with m-TMI increase in the order:

$$\text{n-butyl} \simeq \text{ethyl} < \text{MMA} \simeq \text{m-TMI} < \text{styrene}$$

**Claims for the Contracting States: BE CH DE FR GB IT LI NL SE**

1. A substantially linear, aromatic solvent-soluble copolymer, substantially free of unsaturation and cross-linking, having a molecular weight of 2,000 to 200,000, containing from 5 to 40 mole per cent repeating units derived from meta- or para-isopropenyl-α,α-dimethylbenzylisocyanate, from 20 to 50 mole% repeating units derived from methylmethacrylate, from 35 to 55 mole% repeating units derived from butylacrylate and from 0 to 30 mole% repeating units derived from styrene.

2. A method of forming a copolymer according to Claim 1, comprising solution polymerizing said meta- or para-isopropenyl-α,α-dimethylbenzylisocyanate and said other ethylenically unsaturated comonomers in the presence of a free- radical initiator an aromatic hydrocarbon solvent.

3. A method of forming a copolymer according to Claim 2, comprising solution polymerizing said meta- or para-isopropenyl-α,α-dimethylbenzylisocyanate and said other ethylenically unsaturated comonomers in an aromatic hydrocarbon solvent under irradiation by ultraviolet radiation or electron beam irradiation.

4. A method according to Claim 2 wherein said free-radical initiator is t-butyl perbenzoate, benzoyl peroxide, or mixtures thereof and said copolymerization is conducted in an aromatic hydrocarbon solvent of toluene, xylene, benzene, or chlorobenzene.

5. A method according to claim 2, comprising:

(a) forming a reaction volume comprising said aromatic hydrocarbon solvent, free-radical initiator, portions of all said comonomers except such one of said monomers having the highest reactivity thereof, said one of said monomers being fully present in said reaction volume in an amount to be incorporated into said copolymer; and

(b) adding remaining portions of each apportioned comonomer to said reaction volume under polymerization reaction conditions while maintaining a substantially constant monomer composition in said reaction volume, to form said copolymer with a substantially homogeneous polymeric composition.

6. A method according to Claim 5 wherein said copolymer is a terpolymer containing from 5 to 40 mole percent repeating units derived from meta- or para-isopropenyl-α,α-dimethylbenzylisocyanate, from 20 to 50 mole percent repeating units derived from methyl methacrylate, and from 35 to 55 mole percent repeating units derived from butyl acrylate, wherein said one of said monomers fully present in said reaction volume is butyl acrylate, and said reaction volume in step (a) contains from 25 to 50 percent of the total amount of the methyl methacrylate and butyl acrylate monomers to be incorporated into said copolymer.

7. A curable film-forming composition comprising a resin component containing a copolymer according to Claim 1 and a cross-linkingly effective amount of a curing component consisting of trimethylolpropane, ethylenediamine ketimine, diethylene glycol, 1,2,6-hexanetriol or low molecular weight oligomeric polyols.

8. A method of forming a coating on a substrate, comprising applying to said substrate a film of a curable film-forming composition according to Claim 7, and curing same by exposure to moisture.

9. A method according to Claim 8 wherein said copolymer contains from 10 to 30 mole percent repeating units derived from meta- or para-isopropenyl-α,α-dimethylbenzylisocyanate, from 30 to 50 mole percent repeating units derived from methyl methacrylate and from 35 to 45 mole percent repeating units derived from butyl acrylate.

10. A method according to Claim 8 wherein the molar ratio of copolymer isocyanate groups to curing component hydroxyl or amine groups is approximately 1:1.

### Claims for the Contracting State: AT

1. A method of forming a substantially linear, aromatic solvent-soluble copolymer, substantially free of unsaturation and cross-linking, having a molecular weight of 2,000 to 200,000, containing from 5 to 40 mol percent repeating units derived from meta- or para-isopropenyl-α,α-dimethylbenzylisocyanate, from 20 to 50 mole percent repeating units derived from methylmethacrylate, from 35 to 55 mol percent repeating units derived from butylacrylate and from 0 to 30 mol percent repeating units derived from styrene, comprising solution-polymerizing said meta- or para-isopropenyl-α,α-dimethylbenzylisocyanate and said other ethylenically unsaturated comonomers in the presence of a free-radical initiator in an aromatic hydrocarbon solvent.

2. A method of forming a copolymer according to Claim 1, comprising solution polymerizing said meta- or para-isopropenyl-α,α-dimethylbenzylisocyanate and said other ethylenically unsaturated comonomers in an aromatic hydrocarbon solvent under irradiation by ultraviolet radiation or electron beam irradiation.

3. A method according to Claim 1 wherein said free-radical initiator is t-butyl perbenzoate, benzoyl peroxide, or mixtures thereof and said copolymerization is conducted in an aromatic hydrocarbon solvent of toluene, xylene, benzene, or chlorobenzene.

4. A method according to Claim 1, comprising:

(a) forming a reaction volume comprising said aromatic hydrocarbon solvent, free-radical initiator, portions of all said comonomers except such one of said monomers having the highest reactivity thereof, said one of said monomers being fully present in said reaction volume in an amount to be incorporated into said copolymer; and

(b) adding remaining portions of each apportioned comonomer to said reaction volume under polymerization reaction conditions while maintaining a substantially constant monomer composition in said reaction volume, to form said copolymer with a substantially homogeneous polymeric composition.

5. A method according to Claim 4 wherein said copolymer is a terpolymer containing from 5 to 40 mole percent repeating units derived from meta- or para-isopropenyl-α,α-dimethylbenzylisocyanate, from 20 to 50 mole percent repeating units derived from methyl methacrylate, and from 35 to 55 mole percent repeating units derived from butyl acrylate, wherein said one of said monomers fully present in said reaction volume is butyl acrylate, and said reaction volume in step (a) contains from 25 to 50 percent of the total amount of the methyl methacrylate and butyl acrylate monomers to be incorporated into said copolymer.

6. A curable film-forming composition comprising a resin component containing a copolymer obtained according to Claim 1 and a cross-linkingly effective amount of a curing component consisting of trimethylolpropane, ethylenediamine ketimine, diethylene glycol, 1,2,6-hexanetriol or low molecular weight oligomeric polyols.

7. A method of forming a coating on a substrate, comprising applying to said substrate a film of a curable film-forming composition according to Claim 6, and curing same by exposure to moisture.

8. A method according to Claim 7, wherein said copolymer contains from 10 to 30 mole percent repeating units derived from meta- or para-isopropenyl-α,α-dimethylbenzylisocyanate, from 30 to 50 mole percent repeating units derived from methyl methacrylate and from 35 to 45 mole percent repeating units derived from butyl acrylate.

9. A method according to Claim 7, wherein the molar ratio of copolymer isocyanate groups to curing component hydroxyl or amine groups is approximately 1:1.

**Patentansprüche für die Vertragsstaaten: BE CH DE FR GB IT LI NL SE**

1. Ein im wesentlichen lineares, in aromatischem Lösungsmittel lösliches Copolymerisat, das im wesentlichen frei ist von Unsättigung und Vernetzung, mit einem Molekulargewicht von 2000 bis 200000, enthaltend von 5 bis 40 Mol-% Wiederholungseinheiten, die von meta- oder para-Isopropenyl-α,α-dimethylbenzylisocyanat stammen, von 20 bis 50 Mol-% Wiederholungseinheiten, die von Methylmethacrylat stammen, von 35 bis 55 Mol-% Wiederholungseinheiten, die von Butylacrylat stammen, und von 0 bis 30 Mol-% Wiederholungseinheiten, die von Styrol stammen.

2. Verfahren zur Bildung eines Copolymerisats gemäß Anspruch 1, umfassend die Lösungspolymerisation des meta- oder para-Isopropenyl-α,α-dimethylbenzylisocyanats und der erwähnten anderen ethylenisch ungesättigten Comonomeren in Gegenwart eines freie Radikale bildenden Starters in einem aromatischen Kohlenwasserstofflösungsmittel.

3. Verfahren zur Bildung eines Copolymerisats gemäß Anspruch 2, umfassend die Lösungspolymerisation des meta- oder para-Isopropenyl-α,α-dimethylbenzylisocyanats und der erwähnten anderen ethylenisch ungesättigten Comonomeren in einem aromatischen Kohlenwasserstofflösungsmittel unter Bestrahlung mit ultravioletter Strahlung oder Elektronenstrahl-Bestrahlung.

4. Verfahren gemäß Anspruch 2, wobei der freie Radikale bildende Starter t-Butylperbenzoat, Benzoylperoxid oder ein Gemisch derselben ist und die Copolymerisation in einem aromatischen Kohlenwasserstofflösungsmittel aus Toluol, Xylol, Benzol oder Chlorbenzol durchgeführt wird.

5. Verfahren gemäß Anspruch 2, umfassend

(a) die Bildung eines Reaktionsvolumens, umfassend das aromatische Kohlenwasserstofflösungsmittel, freie Radikale bildenden Starter, Portionen aller der erwähnten Comonomeren mit Ausnahme desjenigen der erwähnten Monomeren mit der höchsten Reaktivität, wobei das erwähnte eine der erwähnten Monomere vollständig in dem Reaktionsvolumen in einer Menge vorliegt, mit der es dem Copolymerisat einverleibt werden soll; und

(b) Zugabe der restlichen Portionen von jedem portionierten Comonomeren zu dem Reaktionsvolumen unter Polymerisationsreaktionsbedingungen unter Aufrechterhaltung einer im wesentlichen konstanten Monomerzusammensetzung in dem Reaktionsvolumen, um das Copolymerisat mit einer im wesentlichen homogenen Polymerzusammensetzung zu bilden.

6. Verfahren gemäß Anspruch 5, wobei das erwähnte Copolymerisat ein Terpolymerisat ist, enthaltend von 5 bis 40 Mol-% Wiederholungseinheiten, die von meta- oder para-Isopropenyl-α,α-dimethylbenzylisocyanat stammen, von 20 bis 50 Mol-% Wiederholungseinheiten, die von Methylmethacrylat stammen, und von 35 bis 55 Mol-% Wiederholungseinheiten, die von Butylacrylat stammen, wobei das erwähnte eine der erwähnten Monomeren, das in dem Reaktionsvolumen vollständig vorliegt, Butylacrylat ist, und wobei das Reaktionsvolumen in Stufe (a) von 25 bis 50 % der Gesamtmenge der Methylmethacrylat- und Butylacrylatmonomeren, die dem Copolymerisat einverleibt werden sollen, enthält.

7. Härtbare, filmbildende Zusammensetzung, umfassend eine Harzkomponente, enthaltend ein Copolymerisat gemäß Anspruch 1 und eine im Sinne von Vernetzung wirksame Menge einer Härtungskomponente, bestehend aus Trimethylolpropan, Ethylendiaminketimin, Diethylenglykol, 1,2,6-Hexantriol oder neidermolekulargewichtige oligomere Polyole.

8. Verfahren zur Bildung einer Beschichtung auf einem Substrat, umfassend die Applikation eines Films aus einer härtbaren, filmbildenden Zusammensetzung gemäß Anspruch 7 auf das Substrat und Härtung des Films durch Feuchtigkeitsexposition.

9. Verfahren gemäß Anspruch 8, wobei das Copolymerisat von 10 bis 30 Mol-% Wiederholungseinheiten enthält, die von meta- oder para-Isopropenyl-α,α-dimethylbenzylisocyanat stammen, von 30 bis 50 Mol-% Wiederholungseinheiten, die von Methylmethacrylat stammen, und von 35 bis 45 Mol-% Wiederholungseinheiten, die von Butylacrylat stammen.

10. Verfahren gemäß Anspruch 8, wobei das Molverhältnis der Copolymerisat-Isocyanatgruppen zu Hydroxyl- oder Amingruppen der Härtungskomponente etwa 1:1 beträgt.

**Patentansprüche für den Vertragsstaat: AT**

1. Verfahren zur Bildung eines im wesentlichen linearen, in aromatischem Lösungsmittel löslichen Copolymerisats, das im wesentlichen frei ist von Unsättigung und Vernetzung, mit einem Molekulargewicht von 2000 bis 200000, enthaltend von 5 bis 40 Mol-% Wiederholungseinheiten, die von meta- oder para-Isopropenyl-α,α-dimethylbenzylisocyanat stammen, von 20 bis 50 Mol-% Wiederholungseinheiten, die von Methylmethacrylat stammen, von 35 bis 55 Mol-% Wiederholungseinheiten, die von Butylacrylat stammen, und von 0 bis 30 Mol-% Wiederholungseinheiten, die von Styrol stammen, umfassend die Lösungspolymerisation des meta- oder para-Isopropenyl-α,α-dimethylbenzylisocyanats und der erwähnten anderen ethylenisch ungesättigten Comonomeren in Gegenwart eines freie Radikale bildenden Starters in einem aromatischen Kohlenwasserstofflösungsmittel.

2. Verfahren zur Bildung eines Copolymerisats gemäß Anspruch 1, umfassend die Lösungspolymerisation des meta- oder para-Isopropenyl-α,α-dimethylbenzylisocyanats und der erwähnten anderen ethylenisch ungesättigten Comonomeren in einem aromatischen Kohlenwasserstofflösungsmittel unter Bestrahlung mit ultravioletter Strahlung oder Elektronenstrahl-Bestrahlung.

3. Verfahren gemäß Anspruch 1, wobei der freie Radikale bildende Starter t-Butylperbenzoat, Benzoylperoxid oder ein Gemisch derselben ist und die Copolymerisation in einem aromatischen Kohlenwasserstofflösungsmittel aus Toluol, Xylol, Benzol oder Chlorbenzol durchgeführt wird.

4. Verfahren gemäß Anspruch 1, umfassend

(a) die Bildung eines Reaktionsvolumens, umfassend das aromatische Kohlenwasserstofflösungsmittel, freie Radikale bildenden Starter, Portionen aller der erwähnten Comonomeren mit Ausnahme desjenigen der erwähnten Monomeren mit der höchsten Reaktivität, wobei das erwähnte eine der erwähnten Monomere vollständig in dem Reaktionsvolumen in einer Menge vorliegt, mit der es dem Copolymerisat einverleibt werden soll; und

(b) Zugabe der restlichen Portionen von jedem portionierten Comonomeren zu dem Reaktionsvolumen unter Polymerisationsreaktionsbedingungen unter Aufrechterhaltung einer im wesentlichen konstanten Monomerzusammensetzung in dem Reaktionsvolumen, um das Copolymerisat mit einer im wesentlichen homogenen Polymerzusammensetzung zu bilden.

5. Verfahren gemäß Anspruch 4, wobei das erwähnte Copolymerisat ein Terpolymerisat ist, enthaltend von 5 bis 40 Mol-% Wiederholungseinheiten, die von meta- oder para-Isopropenyl-α,α-dimethylbenzyliso-cyanat stammen, von 20 bis 50 Mol-% Wiederholungseinheiten, die von Methylmethacrylat stammen, und von 35 bis 55 Mol-% Wiederholungseinheiten, die von Butylacrylat stammen, wobei das erwähnte eine der erwähnten Monomeren, das in dem Reaktionsvolumen vollständig vorliegt, Butylacrylat ist, und wobei das Reaktionsvolumen in Stufe (a) von 25 bis 50 % der Gesamtmenge der Methylmethacrylat- und Butylacrylatmonomeren, die dem Copolymerisat einverleibt werden sollen, enthält.

6. Härtbare, filmbildende Zusammensetzung, umfassend eine Harzkomponente, enthaltend ein Copolymerisat gemäß Anspruch 1 und eine im Sinne von Vernetzung wirksame Menge einer Härtungskomponente, bestehend aus Trimethylolpropan, Ethylendiaminketimin, Diethylenglykol, 1,2,6-Hexantriol oder neidermolekulargewichtige oligomere Polyole.

7. Verfahren zur Bildung einer Beschichtung auf einem Substrat, umfassend die Applikation eines Films aus einer härtbaren, filmbildenden Zusammensetzung gemäß Anspruch 6 auf das Substrat und Härtung des Films durch Feuchtigkeitsexposition.

8. Verfahren gemäß Anspruch 7, wobei das Copolymerisat von 10 bis 30 Mol-% Wiederholungseinheiten enthält, die von meta- oder para-Isopropenyl-α,α-dimethylbenzylisocyanat stammen, von 30 bis 50 Mol-% Wiederholungseinheiten, die von Methylmethacrylat stammen, und von 35 bis 45 Mol-% Wiederholungseinheiten, die von Butylacrylat stammen.

9. Verfahren gemäß Anspruch 7, wobei das Molverhältnis der Copolymerisat-Isocyanatgruppen zu Hydroxyl- oder Amingruppen der Härtungskomponente etwa 1:1 beträgt.

**Revendications pour les Etats contractants: BE CH DE FR GB IT LI NL SE**

1. Copolymère essentiellement linéaire, soluble dans des solvants aromatiques, pratiquement exempt d'insaturation et de réticulation, ayant un poids moléculaire de 2 000 à 200 000, contenant de 5 à 40% en mole de motifs répétitifs dérivés du m- ou p-isopropényl-α,α-diméthylbenzylisocyanate, de 20 à 50% en mole de motifs répétitifs dérivés du méthacrylate de méthyle, de 35 à 55% en mole de motifs répétitifs dérivés de l'acrylate de butyle et de 0 à 30% en mole de motifs répétitifs dérivés du styrène.

2. Procédé de préparation d'un copolymère selon la revendication 1, comprenant la polymérisation en solution dudit m- ou p-isopropényl-α,α-diméthylbenzylisocyanate et desdits autres comonomères à insaturation éthylénique, en présence d'un initiateur de radicaux libres et d'un solvant de type hydrocarbure aromatique.

3. Procédé de préparation d'un copolymère selon la revendication 2, comprenant la polymérisation en solution dudit m- ou p-isopropényl-α,α-diméthylbenzylisocyanate et desdits autres comonomères à insaturation éthylénique, dans un solvant de type hydrocarbure aromatique, avec irradiation par un rayonnement ultraviolet ou irradiation par un faisceau d'électrons.

4. Procédé selon la revendication 2, dans lequel ledit initiateur de radicaux libres est le perbenzoate de tertbutyle, le peroxyde de benzoyle ou des mélanges de ceux-ci et ladite copolymérisation est effectuée dans un solvant de type hydrocarbure aromatique, consistant en le toluène, le xylène, le benzène ou le chlorobenzène.

5. Procédé selon la revendication 2, comprenant

(a) la formation d'un mélange réactionnel comprenant ledit solvant de type hydrocarbure aromatique, l'initiateur de radicaux libres, des portions de tous lesdits monomères à l'exception de celui desdits monomères ayant la plus forte réactivité, celui-ci desdits monomères étant présent en totalité dans ledit mélange réactionnel en une quantité destinée à être incorporée dans ledit copolymère; et

(b) l'addition des portions restantes de chaque comonomère divisé en portions, audit mélange réactionnel dans des conditions d'une réaction de polymérisation, tout en maintenant une composition de monomères pratiquement constante dans ledit mélange réactionnel, pour former ledit copolymère ayant une composition de copolymère pratiquemen homogène.

6. Procédé selon la revendication 5, dans lequel ledit copolymère est un terpolymère contenant de 5 à 40% en mole de motifs répétitifs dérivés du m- ou p-isopropényl-α,α-diméthylbenzylisocyanate, de 20 à 50% en mole de motifs répétitifs dérivés du méthacrylate de méthyle et de 35 à 55% en mole de motifs répétitifs dérivés de l'acrylate de butyle, dans lequel celui desdits monomères qui est présent en totalité dans ledit mélange réactionnel est l'acétate de butyle et ledit mélange réactionnel dans l'étape (a) contient de 25 à 50% de la quantité totale des monomères méthacrylate de méthyle et acrylate de butyle à incorporer dans ledit copolymère.

7. Composition feuillogène durcissable comprenant un composant de type résine contenant un copolymère selon la revendication 1 et une quantité réticulante efficace d'un durcisseur consistant en le triméthylolpropane, l'éthylène-diamine-cétimine, le diéthylèneglycol, le 1,2,6-hexanetriol ou des polyols oligomères à bas poids moléculaires.

8. Procédé de formation d'une revêtement sur un support, comprenant l'application, sur ledit support, d'une feuil d'une composition feuillogène réticulable selon la revendication 2 et le durcissement de celui-ci par exposition à l'humidité.

9. Procédé selon la revendication 8, dans lequel ledit copolymère contient de 10 à 30% en mole de motifs répétitifs dérivés du m- ou p-isopropényl-α,α-diméthylbenzylisocyanate, de 30 à 50% en mole de motifs répétitifs dérivés du méthacrylate de méthyle, et de 35 à 45% en mole de motifs répétitifs dérivés de l'acrylate de butyle.

10. Procédé selon la revendication 8, dans lequel le rapport molaire des groupes isocyanate du copolymère aux groupes hydroxy ou amino du durcisseur est approximativement 1:1.

## Revendications pour l'Etat contractant: AT

1. Procédé de préparation d'un copolymère essentiellement linéaire, soluble dans des solvants aromatiques, pratiquement exempt d'insaturation et de réticulation, ayant un poids moléculaire de 2 000 à 200 000, contenant de 5 à 40% en mole de motifs répétitifs dérivés du m- ou p-isopropényl-α,α-diméthylbenzylisocyanate, de 20 à 50% en mole de motifs répétitifs dérivés du méthacrylate de méthyle, de 35 à 55% en mole de motifs répétitifs dérivés de l'acrylate de butyle et de 0 à 30% en mole de motifs répétitifs dérivés du styrène, comprenant la polymérisation en solution dudit m- ou p-isopropényl-α,α-diméthylbenzylisocyanate et desdits autres comonomères à insaturation éthylénique, en présence d'un initiateur de radicaux libres et d'un solvant de type hydrocarbure aromatique.

2. Procédé de préparation d'un copolymère selon la revendication 1, comprenant la polymérisation en solution dudit m- ou p-isopropényl-α,α-diméthylbenzylisocyanate et desdits autres comonomères à insaturation éthylénique, dans un solvant de type hydrocarbure aromatique, avec irradiation par un rayonnement ultraviolet ou irradiation par un faisceau d'électrons.

3. Procédé selon la revendication 1, dans lequel ledit initiateur de radicaux libres est le perbenzoate de tertbutyle, le peroxyde de benzoyle ou des mélanges de ceux-ci et ladite copolymérisation est effectuée dans un solvant de type hydrocarbure aromatique, consistant en le toluène, le xylène, le benzène ou le chlorobenzène.

4. Procédé selon la revendication 1, comprenant

(a) la formation d'un mélange réactionnel comprenant ledit solvant de type hydrocarbure aromatique, l'initiateur de radicaux libres, des portions de tous lesdits monomères à l'exception de celui desdits monomères ayant la plus forte réactivité, celui-ci desdits monomères étant présent en totalité dans ledit mélange réactionnel en une quantité destinée à être incorporée dans ledit copolymère; et

(b) l'addition des portions restantes de chaque comonomère divisé en portions, audit mélange réactionnel dans des conditions d'une réaction de polymérisation, tout en maintenant une composition de monomères pratiquement constante dans ledit mélange réactionnel, pour former ledit copolymère ayant une composition de copolymère pratiquemen homogène.

5. Procédé selon la revendication 4, dans lequel ledit copolymère est un terpolymère contenant de 5 à 40% en mole de motifs répétitifs dérivés du m- ou p-isopropényl-α,α-diméthylbenzylisocyanate, de 20 à 50% en mole de motifs répétitifs dérivés du méthacrylate de méthyle et de 35 à 55% en mole de motifs répétitifs dérivés de l'acrylate de butyle, dans lequel celui desdits monomères qui est présent en totalité dans ledit mélange réactionnel est l'acétate de butyle et ledit mélange réactionnel dans l'étape (a) contient de 25 à 50% de la quantité totale des monomères méthacrylate de méthyle et acrylate de butyle à incorporer dans ledit copolymère.

6. Composition feuillogène durcissable comprenant un composant de type résine contenant un copolymère obtenu selon la revendication 1 et une quantité réticulante efficace d'un durcisseur consistant en le triméthylolpropane, l'éthylène-diamine-cétimine, le diéthylèneglycol, le 1,2,6-hexanetriol ou des polyols oligomères à bas poids moléculaires.

7. Procédé de formation d'une revêtement sur un support, comprenant l'application, sur ledit support, d'une feuil d'une composition feuillogène réticulable selon la revendication 6 et le durcissement de celui-ci par exposition à l'humidité.

8. Procédé selon la revendication 7, dans lequel ledit copolymère contient de 10 à 30% en mole de motifs répétitifs dérivés du m- ou p-isopropényl-α,α-diméthylbenzylisocyanate, de 30 à 50% en mole de motifs répétitifs dérivés du méthacrylate de méthyle, et de 35 à 45% en mole de motifs répétitifs dérivés de l'acrylate de butyle.

9. Procédé selon la revendication 7, dans lequel le rapport molaire des groupes isocyanate du copolymère aux groupes hydroxy ou amino du durcisseur est approximativement 1:1.